# EUROPEAN PATENT APPLICATION

(11) **EP 2 339 544 A2**
(43) Date of publication of application: **29.06.2011**
(21) Application number: 10380160.1
(22) Date of filing: 20.12.2010
(51) Int. Cl.: G07B 15/06

(54) **Method of payment transactions validation by smart card in a toll route**

(30) Priority: 28.12.2009 ES 200931277
(71) Applicant: Autopistas Concesionaria Española S.A., 08040 Barcelona (ES)
(72) Inventor: Medina Cabezas, Miguel Ángel, 08040 Barcelona (ES)
(74) Representative: Torner Lasalle, Elisabet

(57) **Abstract**

This method includes offline validation operations from a local system, generally in said toll road, and furthermore online validation operations for magnetic stripe cards and smart cards to complement offline validation operations by means of the communication of said local system with a remote system, in which it has been envisaged that the speed of said online communication increases by means of a selective operation of the reading of the smart cards, mainly according to the traffic conditions.

## Description

### Field of the Art

The present invention relates to a method for validating transactions by means of a payment card, particularly a smart card, in a toll road, in which performing offline validation operations for said card has been envisaged, basing it on a local system, and complementarily online validation operations, by means of the communication of said local system with a remote system, which integrates or is connected to an authorizing center.

The invention proposes in said environment wherein local validation and online validation of magnetic stripe cards and of smart cards are combined, a strategy applicable in determined circumstances (mainly in situations of high traffic density) which allows reducing considerably the online validation transaction time, and consequently reducing in said cases disturbances on the fluidity of the traffic which flows through a toll station, caused by said delays.

### Prior State of the Art

Most known toll systems use, for the validation of payment transactions by card (comprising different payment means, such as credit cards or even smart cards, or chip cards, or EMV Europay MasterCard), in addition to offline validation methods, based on a local control center with means for reading and interpreting the data of the cards (expiration, issuing entity, codes) and databases with lists of invalid cards for various reasons, online validation methods.

Patent US6145035 describes a system for performing transactions using a smart card as the payment means. Its description indicates that the card can be an EMV (Europay MasterCard VISA) card, and that one of the applications is that of toll payment.

Application WO2004095352A1discloses a proposal which, although it does not relate to tolls, describes the adaptation of a system incorporating a magnetic stripe reader, a smart card reader and a computer with an operating system adapted to process the information read from the magnetic stripes, but not from the smart card. To that end, the system comprises a device application module and a smart card module, the former being adapted to send a payment communication to the latter through a program application interface when a transaction with the smart card is performed. The smart card module facilitates the processing of said transaction and operates independently from any other device of the system. It is claimed that the card is an EMV card.

Toll systems are also known which complement the mentioned offline validation with an online validation by means of the communication of a local system with a remote system, or authorizing center, thus giving greater security and robustness to the mentioned transaction validation.

One of such systems is described in the document "Validación Online y tarjetas EMV" (Online validation and EMV cards), of Indra, ITS Barcelona March 2009, which proposes an online validation system for, for example, EMV cards in toll roads communicated with an online server for offline or online validations, indicating that the conventional offline validation system would have to be adapted by installing certified terminals and applications, for its integration in an online system.

In numerous occasions, minimizing the transaction time is a critical aspect in the online validation systems applied on toll roads in order to thereby facilitate the fluidity of the traffic through the toll station.

The invention provides a method for solving this problem in determined times of traffic by proposing a partial reading of smart cards that is sufficient for the validation thereof, such that inadmissible delays to the validation operations, affecting not only the user who is performing the transaction but also the rest who are waiting behind him, do not happen.

### Description of the Invention

The present invention relates to a method for validating transactions in a toll road, in which there are performed offline validation operations from a local system, and furthermore online validation operations (for complementing offline validation operations) by means of the communication of said local system with a remote system, in which it has been envisaged that the speed of said online communication increases by means of a selective operation of the reading of the smart cards, mainly according to the traffic conditions, obtained from a remote control center or control center or from a local center.

As is known, smart cards have a magnetic stripe in which there is a series of data relating to user identification, expiration, issuing entity, indication of nationality, and the existence of a dedicated microprocessor, among others.

For that purpose and taking into account that, given a transaction time of tenths of a second for the reading of a smart card, there are times in the order of three seconds for the additional reading of a smart card (due to the access time through contacts, reading and verification), in determined cases (mainly in situations of high traffic density) the invention proposes limiting the validation of the transaction to the reading of the magnetic stripe of the card, performing only one local and online validation, or even only local validation, based on said reading depending on the communication conditions in relation to the time required for each passage control, according to the traffic conditions.

In this manner the invention can be implemented for a validation of a payment card such as a chip card, or EMV card, introduced by a user to perform said transaction in a toll road of a toll station, performing the mentioned validation limited to the reading of the magnetic stripe of the card:
- offline only, based on a reading and local control system; or
- offline and online.

According to the proposal of the invention, the mentioned partial reading can be activated from said local system at determined times of high traffic density which flows through the toll station.

The discrimination between the complete or only partial reading of the smart card can be established based on identifying the card issuer which provides information on nationality which is used to activate the partial reading of the card.

Thus, if for example the issuer is a national issuer, only the information of the magnetic stripe would be read and the validation would be based on a set of data relating to the card holder, which are well established in local databases (blacklists) or remote databases (authorizing centers) in an online connection.

The invention thus offers a solution to assure viability of the validation task without negative repercussions in the fluidity of the traffic.

## Claims

1. A method for validating payment transactions by smart card in a toll road, which includes offline validation operations from a local system, and complementary online validation operations for magnetic stripe cards or smart cards by means of the communication of said local system with a remote system or control center, **characterized in that** it comprises performing a partial reading of the smart cards limited to a reading of the magnetic stripe of said cards, depending on determined traffic conditions comprising high traffic density through said toll road, supplied from a control center to said local system or obtained from the local system itself.

2. The method according to claim 1, **characterized in that** said validation is only performed offline, based on a reading and local control system.

3. The method according to claim 1, **characterized in that** said validation is performed offline and online.

4. The method according to claim 1, **characterized in that** said partial reading can be activated from said local system at determined times, selecting an identification of the card issuer.

5. The method according to claim 1, **characterized in that** said identification of the card issuer provides information on nationality which is used to activate the partial reading of the card.

6. The method according to any of the previous claims, **characterized in that** said validation operations relate to the validation of a payment card introduced by a user to perform said transaction in a toll road of a toll station.

7. The method according to claim 6, **characterized in that** said payment card is a chip card or EMV card.
